(19) Europäisches Patentamt
European Patent Office
Office européen des brevets

(11) **EP 1 470 968 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(51) Int Cl.:
***B60R 21/01*** *(2006.01)*

(21) Anmeldenummer: **03009242.3**

(22) Anmeldetag: **23.04.2003**

(54) **Insassenerkennungssystem für Fahrzeuge**

Occupant detection system for vehicles

Système de détection d'un occupant pour véhicule

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**27.10.2004 Patentblatt 2004/44**

(73) Patentinhaber: **Delphi Technologies, Inc.**
**Troy, MI 48007 (US)**

(72) Erfinder:
• **Fischer, Thomas**
**57482 Wenden (DE)**

• **Wiemer, Lars**
**40223 Düsseldorf (DE)**

(74) Vertreter: **Manitz, Finsterwald & Partner GbR**
**Postfach 31 02 20**
**80102 München (DE)**

(56) Entgegenhaltungen:
**EP-A- 0 891 898          EP-A- 0 900 705**
**WO-A-01/62539          US-B2- 6 542 802**

EP 1 470 968 B1

**Beschreibung**

Die Erfindung betrifft ein Insassenerkennungssystem für Fahrzeuge, mit wenigstens einem unterhalb des Schaumstoffs eines Fahrzeugsitzes angeordneten Drucksensor, wenigstens einem Temperatursensor und einer elektronischen Steuer- und/oder Auswerteeinheit, mit der die Sensoren verbunden sind. Ein Insassener Kennungssystem dieser Art ist aus der EP-A-0 900 705 bekannt.

Bei einem solchen passiven Insassenerkennungssystem wird in der Regel eine flexible, fluidgefüllte Sensormatte verwendet, um den Druck zu erfassen, den ein den jeweiligen Fahrzeugsitz belastendes Gewicht hervorruft. Die Sensormatte ist unter dem Sitzschaum angeordnet und demzufolge zumindest im Wesentlichen der gleichen Temperatur wie der Sitzschaum ausgesetzt. Da der gemessene Druck in hohem Maße temperaturabhängig ist, wird in der Regel ein Temperatursensor verwendet, um die Temperatur des Systems zu messen. Der Temperatursensor ist bevorzugt innerhalb der elektronischen Steuer- und/oder Auswerteeinheit angeordnet. Die physikalisch relevante Temperatur ist nun aber die Schaumstofftemperatur.

Bisher wurde der vom Temperatursensor gemessene Temperaturwert zur Berechnung des Temperaturkompensationswertes herangezogen. Beim Aufheizen und Abkühlen des Fahrzeugs bzw. bei allen Übergangstemperatureffekten weicht die Temperatur der elektronischen Steuer- und/oder Auswerteeinheit jedoch stark von der Schaumstofftemperatur ab. Die für das zeitliche Temperaturverhalten maßgebliche Zeitkonstante liegt für Schaumstoff im Bereich von etwa 30 min und für die elektronische Steuer- und/oder Auswerteeinheit bei etwa 5 min.

Insbesondere bei stärkeren Temperaturveränderungen kommt es also zu einer Differenz zwischen der vom Temperatursensor gemessenen Temperatur und der im Sitzschaum tatsächlich vorherrschenden Temperatur. Der Sitzschaum erwärmt sich langsamer als der Temperatursensor bzw. der Bereich, in dem der Temperatursensor angeordnet ist. Wird nun beispielsweise anhand des gemessenen Drucks entschieden, ob ein Airbag eingeschaltet werden soll oder nicht, so sind mit der Temperaturkompensation beispielsweise solche Parameterwerte wie der Leerdruck und die Zulässigkeitsschwelle entsprechend der gemessenen Temperatur zu ändern. Im Fall stärkerer Temperaturveränderungen erfolgt im vorliegenden Fall basierend auf der vom Temperatursensor gemessenen Temperatur also eine falsche Kompensation bzw. eine falsche Einstellung der betreffenden Parameterwerte.

Bei dem aus der EP-A-0 900 705 bekannten Insassenerkennungssystem ist der Temperatursensor in der Nähe einer den Druck erfassenden flexiblen, fluidgefüllten Sensormatte angeordnet. Über diesen Temperatursensor wird somit im wesentlichen die in der Sensormatte und im Schaumstoff des Fahrzeugsitzes vorherrschende Temperatur gemessen.

Der Erfindung liegt die Aufgabe zugrunde, ein verbessertes Insassenerkennungssystem der eingangs genannten Art zu schaffen, bei dem die zuvor genannten Probleme beseitigt sind.

Diese Aufgabe wird nach der Erfindung dadurch gelöst, dass Mittel vorgesehen sind, um das bei Änderungen der Temperatur gegebene Zeitverhalten des Ausgangssignals des in einem Abstand von dem Drucksensor bzw. dem Sitzschaum angeordneten Temperatursensors an das Zeitverhalten der im Bereich des Drucksensors bzw. des Sitzschaums vorherrschenden Temperatur anzugleichen.

Aufgrund dieser Ausbildung steht mit dem angeglichenen Ausgangssignal des Temperatursensors nun ein Temperatursignal zur Verfügung, das repräsentativ für die Schaumstofftemperatur ist. Damit kann nunmehr das entsprechend angeglichene Ausgangssignal dieses Temperatursensors in der elektronischen Steuer- und/oder Auswerteeinheit zur Kompensation der Temperaturabhängigkeit des über den Drucksensor gemessenen Drucks herangezogen werden. Nachdem zur Kompensation das entsprechend angeglichene Ausgangssignal des Temperatursensors verwendet wird, ist stets eine zuverlässige Kompensation gewährleistet.

Die Angleichungsmittel sind vorzugsweise der elektronischen Steuer- und/oder Auswerteeinheit zugeordnet.

Bei einer bevorzugten praktischen Ausführungsform des erfindungsgemä-ßen Insassenerkennungssystems umfassen die Angleichungsmittel ein Tiefpassfilter. Als solches Tiefpassfilter kann insbesondere ein Softwarefilter vorgesehen sein.

Bevorzugt ist als Tiefpassfilter ein Butterworth-Filter und insbesondere ein Butterworth-Filter 1. Ordnung vorgesehen.

Die Parameter des Filters sind zweckmäßigerweise so gewählt, dass das gefilterte Ausgangssignal des Temperatursensors zumindest im Wesentlichen mit der aus Versuchsmessungen gewonnenen Schaumtemperatur übereinstimmt. Bei jeweiligen Änderungen der Umgebungstemperatur soll sich das gefilterte Ausgangssignal des Temperatursensors also zumindest annähernd so verhalten wie die Schaumtemperatur.

Wie bereits erwähnt, kann der Drucksensor insbesondere eine flexible, fluidgefüllte Sensormatte umfassen. Dabei kann der Drucksensor insbesondere einen dem Druck innerhalb der Sensormatte entsprechenden Druckwert liefern. Mit steigender Umgebungstemperatur steigt trotz gleichbleibenden, dem Kraftfahrzeugsitz belastenden Gewichts auch der gemessene Druck in der flexiblen, fluidgefüllten Matte. Diese Temperaturabhängigkeit wird dann unter Heranziehung des in der beschriebenen Weise an die Schaumstofftemperatur angeglichenen bzw. entsprechend gefilterten Ausgangssignals des Temperatursensors kompensiert.

Der Drucksensor ist zweckmäßigerweise unmittelbar unter dem Sitzschaum angeordnet.

Der Temperatursensor kann insbesondere einen Thermistor umfassen.

Der Temperatursensor kann insbesondere im Bereich der elektronischen Steuer- und/oder Auswerteeinheit angeordnet sein. Bevorzugt ist er in demselben Gehäuse wie diese elektronische Steuer- und/oder Auswerteeinheit untergebracht.

Die elektronische Steuer- und/oder Auswerteeinheit ist vorzugsweise unter dem Fahrzeugsitz angeordnet und befestigt.

Bei einer bevorzugten praktischen Ausführungsform des erfindungsgemä-ßen Insassenerkennungssystems wird mittels der elektronischen Steuer- und/oder Auswerteeinheit der über den Drucksensor gemessene Druck mit wenigstens einem Parameterwert wie z.B. einem Leerdruck-Wert und/oder einer Zulässigkeitsschwelle verglichen und in Abhängigkeit vom Vergleichsergebnis entschieden, ob ein Airbag eingeschaltet wird oder nicht, wobei der betreffende Parameterwert im Rahmen der Kompensation der Temperaturabhängigkeit entsprechend geändert wird.

Erfindungsgemäß wird also bevorzugt ein Softwarefilter eingesetzt, um insbesondere auf der Basis der gemessenen Temperatur der elektronischen Steuer- und/oder Auswerteeinheit nach einer entsprechenden Filterung einen Schätzwert für die Schaumstofftemperatur zu erhalten. Die Erfindung wird im folgenden anhand von Ausführungsbeispielen unter Bezugnahme auf die Zeichnung näher erläutert; in dieser zeigen:

Figur 1   ein Zeitdiagramm, aus dem sich der unterschiedliche Einfluss einer sich ändernden Umgebungstemperatur auf die Schaumstofftemperatur und die Temperatur der elektronischen Steuer- und /oder Auswerteeinheit ergibt,

Figur 2   ein Schaltschema eines Butterworth-Tiefpassfilters 1. Ordnung zur Filterung des Ausgangssignals des Temperatursensors,

Figur 3   ein Zeitdiagramm, aus dem sich der jeweilige zeitliche Verlauf der über den Temperatursensor gemessenen Temperatur, der gemessenen Schaumstofftemperatur und des mittels des Butterworth-Tiefpassfilters gefilterten Ausgangssignals des Temperatursensors ergibt, und

Figur 4   ein weiteres Zeitdiagramm, in dem nochmals das Ausgangssignal des Filters und das Ausgangssignal des Temperatursensors einander gegenübergestellt sind.

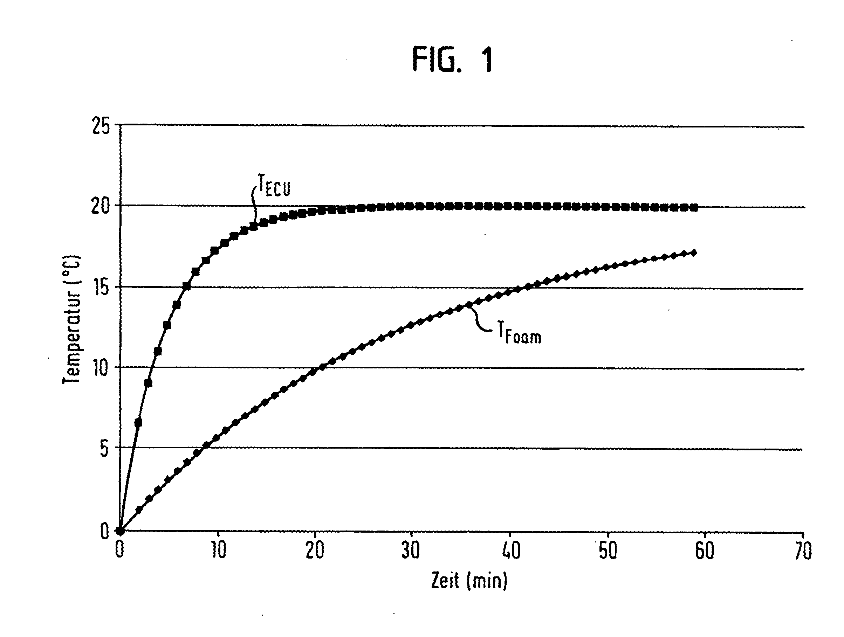

Aus dem Zeitdiagramm gemäß Figur 1 ergibt sich der unterschiedliche Einfluss einer sich ändernden Umgebungstemperatur auf die Schaumstofftemperatur und die vom Temperatursensor gemessene Temperatur der elektronischen Steuer- und/oder Auswerteeinheit. Dabei gibt die Kurve $T_{ECU}$ den Verlauf der in der Steuer- und/oder Auswerteeinheit vorherrschenden Temperatur und die Kurve $T_{Foam}$ den Verlauf der Schaumstofftemperatur wieder.

Wie bereits erwähnt, kann es sich bei dem Drucksensor insbesondere um eine flexible, fluidgefüllte Sensormatte handeln. Der Druck in dieser Sensormatte ist temperaturabhängig. So steigt trotz gleichbleibenden Gewichts auf dem Fahrzeugsitz mit steigender Umgebungstemperatur auch der gemessene Druck in der Sensormatte. Anhand des gemessenen Drucks wird mittels der Steuer- und/oder Auswerteeinheit beispielsweise entschieden, ob ein Airbag eingeschaltet wird oder nicht. Demzufolge ist eine Temperatur-Kompensation erforderlich, d.h. die Parameterwerte wie z.B. der Leerdruck und die Zulässigkeitsschwelle werden entsprechend der gemessenen Temperatur verändert.

Der im Insassenerkennungssystem für diesen Zweck vorgesehene Temperatursensor bzw. Thermistor befindet sich in der elektronischen Steuer- und/oder Auswerteeinheit des Systems, die insbesondere unter dem Fahrzeugsitz angeordnet und befestigt sein kann. Bei extremen Temperaturveränderungen weichen die vom Temperatursensor gemessene Temperatur $T_{ECU}$ und die im Sitzschaum tatsächlich vorherrschende Temperatur $T_{Foam}$ voneinander ab. So erwärmt sich der Sitzschaum langsamer als der Temperatursensor bzw. Thermistor. Für den gemessenen Druck ist nun aber die Temperatur $T_{Foam}$ des Sitzschaums relevant, so dass im Fall extremer Temperaturveränderungen im Fahrzeug z.B. der Leerdruck und die Zulässigkeitsschwelle (sogenannte "Allow-Schwelle") basierend auf der vom Temperatursensor gemessenen Temperatur falsch kompensiert würde.

Es sind nun zwei unterschiedliche Erwärmungsvorgänge zu betrachten, nämlich der des Temperatursensors bzw. Thermistors und der des Sitzschaumes. Zu beachten ist hierbei, dass sich der Sitzschaum aufgrund seiner wärmisolierenden Eigenschaften langsamer erwärmt als der Drucksensor bzw. der Bereich, in dem dieser angeordnet ist.

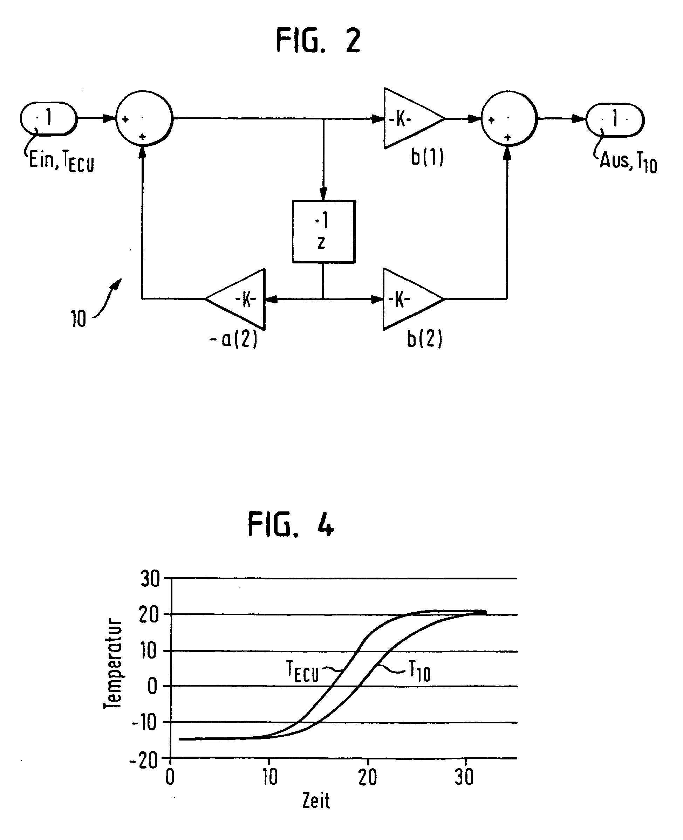

Bei einer bevorzugten Ausführungsform des erfindungsgemäßen Insassenerkennungssystems erfolgt nun dadurch eine Annäherung an die Schaumstofftemperatur $T_{Foam}$, dass das Ausgangssignal des Temperatursensors bzw. Thermistors mittels eines Butterworth-Tiefpassfilters 1. Ordnung gefiltert wird. In der Figur 2 ist ein solches Filter, das hier mit dem Bezugszeichen "10" versehen ist, wiedergegeben.

Mit dem Filtern des Ausgangssignals des Temperatursensors mittels eines solchen Butterworth-Tiefpassfilters 1. Ordnung erhält man einen Temperaturverlauf, der mit dem der im Schaumstoff vorherrschenden Temperatur sehr gut übereinstimmt. Eine Temperaturkompensation basierend auf einem solchen gefilterten Temperatursignal ist entsprechend genauer.

Ein entsprechendes Tiefpassfilter mit sehr kleiner Grenzfrequenz bewirkt, dass schnelle Änderungen des Thermistorsignals beispielsweise aufgrund eines schnellen Aufheizens des Kraftfahrzeuginnenraums verzögert werden und entsprechend ein Temperaturverlauf simuliert wird, der dem Erwärmungsvorgang des Sitzschaums entspricht. Bei konstanter Temperatur bzw. kleinem Temperaturgradienten hat das Filter 10 keine Wirkung.

Bevor auf die bevorzugte numerische Verwirklichung des Filters eingegangen wird, sei zuvor die an sich ebenfalls denkbare analytische Annäherung erwähnt:

Dabei ergibt die Lösung der Differentialgleichung für den Wärmeübergang

$$1) \qquad T_{ECU} = T_\infty + (T_{ECU,\,t=0} - T_\infty) \cdot e^{-\frac{t}{\tau_{ECU}}}$$

$$2) \qquad T_{Foam} = T_\infty + (T_{Foam,\,t=0} - T_\infty) \cdot e^{-\frac{t}{\tau_{Foam}}} ,$$

wobei sich die beiden Zeitkonstanten $\tau_{ECU}$ und $\tau_{Foam}$ für die elektronische Steuer- und/oder Auswerteeinheit (ECU) und den Schaumstoff (Foam) voneinander unterscheiden. Dabei können diese Zeitkonstanten beispielsweise die folgenden Werte besitzen:

$\tau_{ECU} \approx 10$ min
$\tau_{Foam} \approx 30$ min

Die Ideallösung würde wie folgt aussehen:

Die Ermittlung der Umgebungstemperatur $T_\infty$ aus der Temperatur $T_{ECU}$ der elektronischen Steuer- und/oder Auswerteeinheit und deren zeitlichen Ableitung $\dot{T}_{ECU}$ wird zu

$$3) \qquad T_\infty = T_{ECU} + \tau_{ECU} \cdot \dot{T}_{ECU},$$

woraus sich folgendes ergibt:

$$4) \qquad T_{Foam} = (T_{ECU} + \tau_{ECU} \cdot \dot{T}_{ECU}) + \Delta T_{t=0} \cdot e^{-\frac{t}{\tau_{ECU}}} ,$$

mit $\Delta T_{t=0} = T_{ECU,\,t=0} - T_\infty$.
Dies gilt allerdings nur für einen stationären Prozess ($T_\infty$ = const.).

Bei der bevorzugten numerischen Verwirklichung des Filters wird zur Berechnung der Schaumtemperatur der aktuelle Messwert (n) des Temperatursensors und dessen vorangehender Wert (n-1) benötigt.

Bei der Eingangsgröße "Ein" des in der Figur 2 wiedergegebenen Butterworth-Tiefpassfilters 1. Ordnung handelt es sich um die vom Temperatursensor gemessene Temperatur $T_{ECU}$. Die Ausgangsgröße "Aus" entspricht der Schaumtemperatur $T_{Foam}$.

Für die Schaumstofftemperatur $T_{Foam}$ gilt die folgende Beziehung:

$$5) \quad T_{\mathbf{Foam}} = C \cdot z(n) + D \cdot T_{ECU}(n).$$

Die Zwischengröße $z(n)$ wird aus deren Vorgänger $z(n-1)$ und dem vorangehenden Messwert $T_{ECU}(n-1)$ des Temperatursensors bzw. Thermistors berechnet:

$$6) \quad z(n) = A \cdot z(n-1) + B \cdot T_{ECU}(n-1),$$

wobei sich der Startwert aus der folgenden Beziehung ergibt:

$$7) \quad z(0) = T_{ECU}(0) \cdot (1-D)/C$$

Die Parameter A, B, C und D des Butterworth-Tiefpassfilters 10 werden bevorzugt so gewählt, dass das gefilterte Temperatursignal mit der aus Versuchsmessungen gewonnenen Schaumtemperatur übereinstimmt. Sie werden von der Grenzfrequenz des Filters 10 bestimmt und können mit einer entsprechenden Software berechnet werden.

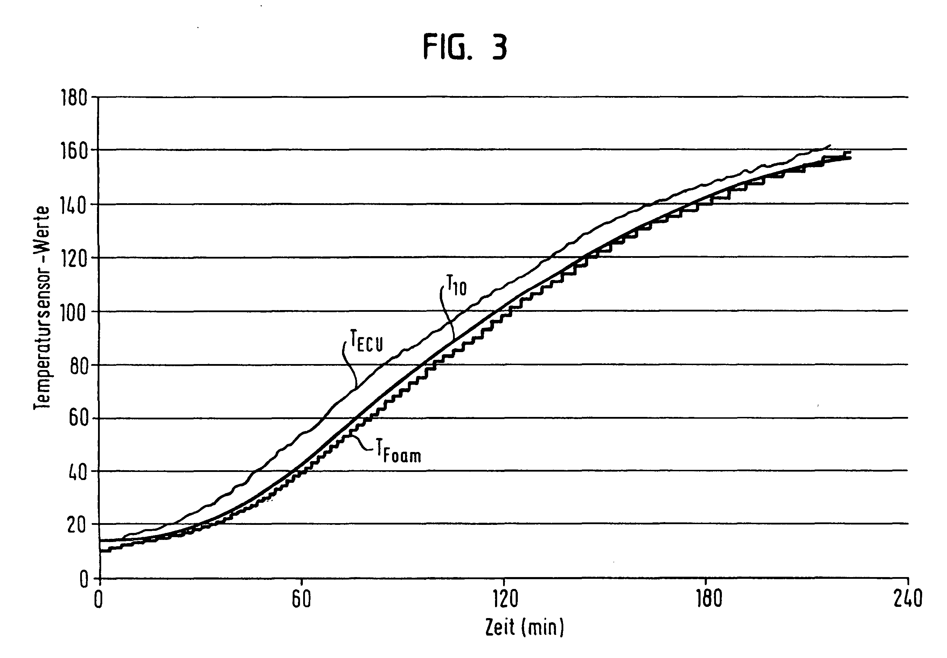

Aus dem Zeitdiagramm gemäß Figur 3 ergibt sich der jeweilige zeitliche Verlauf der über den Temperatursensor gemessenen Temperatur $T_{ECU}$, der gemessenen Schaumstofftemperatur $T_{Foam}$ und des mittels des Butterworth-Tiefpassfilters 10 gefilterten Ausgangssignals $T_{10}$ des Temperatursensors. Demnach stimmt das gefilterte Ausgangssignal $T_{10}$ weitgehend mit der tatsächlichen Schaumstofftemperatur $T_{Foam}$ überein, so dass auf dessen Basis eine präzise Temperaturkompensation möglich ist.

Figur 4 zeigt ein weiteres Zeitdiagramm, in dem in einem anderen Maßstab nochmals das Ausgangssignal $T_{10}$ des Filters 10 und das Ausgangssignal $T_{ECU}$ des Temperatursensors einander gegenübergestellt sind.

**Bezugszeichenliste**

| | |
|---|---|
| 10 | Filter, Butterworth-Tiefpassfilter 1. Ordnung |
| Aus, $T_{10}$ | Filterausgang |
| Ein, $T_{ECU}$ | Filtereingang |
| $T_{ECU}$ | Temperatur des Temperatursensors |
| $T_{Foam}$ | Schaumstofftemperatur |
| $T_{10}$ | gefiltertes Ausgangssignal des Temperatursensors, Filterausgang |
| $\tau_{ECU}$ | Zeitkonstante der elektronischen Steuer- und/oder Auswerteeinheit |
| $\tau_{Foam}$ | Zeitkonstante des Schaumstoffs |

**Patentansprüche**

1. Insassenerkennungssystem für Fahrzeuge, mit wenigstens einem unterhalb des Schaumstoffs eines Fahrzeugsitzes angeordneten Drucksensor, wenigstens einem Temperatursensor und einer elektronischen Steuer- und/oder Auswerteeinheit, mit der die Sensoren verbunden sind,
**dadurch gekennzeichnet,**
**dass** Mittel vorgesehen sind, um das bei Änderungen der Temperatur gegebene Zeitverhalten des Ausgangssignals ($T_{ECU}$) des in einem Abstand von dem Drucksensor bzw. dem Sitzschaum angeordneten Temperatursensors an das Zeitverhalten der im Bereich des Drucksensors bzw. des Sitzschaumes vorherrschenden Temperatur ($T_{FOAM}$) anzuggleichen.

2. Insassenerkennungssystem nach Anspruch 1,

**dadurch gekennzeichnet,**
**dass** das entsprechend angeglichene Ausgangssignal ($T_{10}$) des Temperatursensors in der elektronischen Steuer- und/oder Auswerteeinheit zur Kompensation der Temperaturabhängigkeit des über den Drucksensor gemessenen Drucks herangezogen wird.

3. Insassenerkennungssystem nach Anspruch 1 oder 2 ,
**dadurch gekennzeichnet,**
**dass** die Angleichungsmittel der elektronischen Steuer- und/oder Auswerteeinheit zugeordnet sind.

4. Insassenerkennungssystem nach einem der vorhergehenden Ansprüche,
**dadurch gekennzeichnet,**
**dass** die Angleichungsmittel ein Tiefpassfilter (10) umfassen.

5. Insassenerkennungssystem nach Anspruch 4,
**dadurch gekennzeichnet,**
**dass** das Tiefpassfilter (10) als Softwarefilter vorgesehen ist.

6. Insassenerkennungssystem nach Anspruch 4 oder 5,
**dadurch gekennzeichnet ,**
**dass** als Tiefpassfilter ein Butterworth-Filter (10) vorgesehen ist.

7. Insassenerkennungssystem nach Anspruch 5,
**dadurch gekennzeichnet,**
**dass** als Tiefpassfilter (10) ein Butterworth-Filter 1. Ordnung vorgesehen ist.

8. Insassenerkennungssystem nach einem der vorhergehenden Ansprüche,
**dadurch gekennzeichnet,**
**dass** die Parameter des Filters (10) so gewählt sind, dass das gefilterte Ausgangssignal ($T_{10}$) des Temperatursensors zumindest im Wesentlichen mit der aus Versuchsmessungen gewonnenen Schaumtemperatur ($T_{FOAM}$) übereinstimmt.

9. Insassenerkennungssystem nach einem der vorhergehenden Ansprüche,
**dadurch gekennzeichnet,**
**dass** der Drucksensor eine flexible, fluidgefüllte Sensormatte umfasst.

10. Insassenerkennungssystem nach Anspruch 9,
**dadurch gekennzeichnet,**
**dass** der Drucksensor einen dem Druck innerhalb der Sensormatte entsprechenden Druckwert liefert.

11. Insassenerkennungssystem nach einem der vorhergehenden Ansprüche,
**dadurch gekennzeichnet,**
**dass** der Drucksensor unmittelbar unter dem Sitzschaum angeordnet ist.

12. Insassenerkennungssystem nach einem der vorhergehenden Ansprüche,
**dadurch gekennzeichnet,**
**dass** der Temperatursensor einen Thermistor umfasst.

13. Insassenerkennungssystem nach einem der vorhergehenden Ansprüche,
**dadurch gekennzeichnet,**
**dass** der Temperatursensor im Bereich der elektronischen Steuer- und/oder Auswerteeinheit angeordnet ist.

14. Insassenerkennungssystem nach Anspruch 13,
**dadurch gekennzeichnet,**
**dass** der Temperatursensor in demselben Gehäuse wie die elektronische Steuer- und/oder Auswerteeinheit untergebracht ist.

15. Insassenerkennungssystem nach einem der vorhergehenden Ansprüche,
**dadurch gekennzeichnet,**

**dass** die elektronische Steuer- und/oder Auswerteeinheit unter dem Fahrzeugsitz angeordnet und befestigt ist.

16. Insassenerkennungssystem nach einem der vorhergehenden Ansprüche,
**dadurch gekennzeichnet,**
**dass** mittels der elektronischen Steuer- und/oder Auswerteeinheit der über den Drucksensor gemessene Druck mit wenigstens einem Parameterwert wie z.B. einem Leerdruck-Wert und/oder einer Zulässigkeitsschwelle verglichen und in Abhängigkeit vom Vergleichsergebnis entschieden wird, ob ein Airbag eingeschaltet wird oder nicht, wobei der betreffende Parameterwert im Rahmen der Kompensation der Temperaturabhängigkeit entsprechend geändert wird.

**Claims**

1. An occupant recognition system for vehicles comprising at least one pressure sensor arranged beneath the foam of a vehicle seat, at least one temperature sensor and an electronic control and/or evaluation unit to which the sensors are connected,
**characterized in that** means are provided to match the time behavior present on changes of the temperature of the output signal ($T_{ECU}$) of the temperature sensor arranged at a spacing from the pressure sensor or from the seat foam to the time behavior of the temperature ($T_{FOAM}$) prevailing in the region of the pressure sensor or of the seat foam.

2. An occupant recognition system in accordance with claim 1, **characterized in that** the correspondingly matched output signal ($T_{10}$) of the temperature sensor in the electronic control and/or evaluation unit is used for the compensation of the temperature dependence of the pressure measured via the pressure sensor.

3. An occupant recognition system in accordance with claim 1 or claim 2, **characterized in that** the matching means are associated with the electronic control and/or evaluation unit.

4. An occupant recognition system in accordance with any one of the preceding claims, **characterized in that** the matching means include a low-pass filter (10).

5. An occupant recognition system in accordance with claim 4, **characterized in that** the low-pass filter (10) is provided as a software filter.

6. An occupant recognition system in accordance with claim 4 or claim 5, **characterized in that** a Butterworth filter (10) is provided as the low-pass filter.

7. An occupant recognition system in accordance with claim 5, **characterized in that** a Butterworth filter of the first order is provided as the low-pass filter (10).

8. An occupant recognition system in accordance with any one of the preceding claims, **characterized in that** the parameters of the filter (10) are selected such that the filtered output signal ($T_{10}$) of the temperature sensor coincides at least substantially with the foam temperature ($T_{FOAM}$) gained from trial measurements.

9. An occupant recognition system in accordance with any one of the preceding claims, **characterized in that** the pressure sensor includes a flexible sensor mat filled with fluid.

10. An occupant recognition system in accordance with claim 9, **characterized in that** the pressure sensor supplies a pressure value corresponding to the pressure inside the sensor mat.

11. An occupant recognition system in accordance with any one of the preceding claims, **characterized in that** the pressure sensor is arranged directly beneath the seat foam.

12. An occupant recognition system in accordance with any one of the preceding claims, **characterized in that** the temperature sensor includes a thermistor.

13. An occupant recognition system in accordance with any one of the preceding claims, **characterized in that** the temperature sensor is arranged in the region of the electronic control and/or evaluation unit.

**14.** An occupant recognition system in accordance with claim 13, **characterized in that** the temperature sensor is accommodated in the same housing as the electronic control and/or evaluation unit.

**15.** An occupant recognition system in accordance with any one of the preceding claims, **characterized in that** the electronic control and/ or evaluation unit is arranged and fastened beneath the vehicle seat.

**16.** An occupant recognition system in accordance with any one of the preceding claims, **characterized in that** the pressure measured via the pressure sensor is compared by means of the electronic control and/or evaluation unit with at least one parameter value such as an empty pressure value and/or an allow threshold and **in that** a decision is made in dependence on the result of the comparison whether an airbag is switched on or not, with the relevant parameter value being changed accordingly as part of the compensation of the temperature dependence.

**Revendications**

**1.** Système de détection d'occupant pour des véhicules, avec au moins un capteur de pression disposé en dessous de la mousse d'un siège de véhicule, au moins un capteur de température et une unité électronique de commande et/ou d'évaluation, à laquelle les capteurs sont reliés, **caractérisé en ce qu'**il est prévu des moyens pour compenser, lors de variations de la température, le comportement temporel du signal de sortie ($T_{ECU}$) du capteur de température disposé à distance du capteur de pression respectivement de la mousse du siège avec le comportement temporel de la température ($T_{Foam}$) régnant dans la région du capteur de pression respectivement de la mousse du siège.

**2.** Système de détection d'occupant selon la revendication 1, **caractérisé en ce que** le signal de sortie ($T_{10}$) du capteur de température, compensé de manière correspondante, est utilisé dans l'unité électronique de commande et/ou d'évaluation pour la compensation de la dépendance à la température obtenue par la mesure de la pression par le capteur de pression.

**3.** Système de détection d'occupant selon la revendication 1 ou 2, **caractérisé en ce que** les moyens de compensation sont associés à l'unité électronique de commande et/ou d'évaluation.

**4.** Système de détection d'occupant selon l'une quelconque des revendications précédentes, **caractérisé en ce que** les moyens de compensation comprennent un filtre passe-bas (10).

**5.** Système de détection d'occupant selon la revendication 4, **caractérisé en ce que** l'on prévoit comme filtre passe-bas (10) un filtre logiciel.

**6.** Système de détection d'occupant selon la revendication 4 ou 5, **caractérisé en ce que** l'on prévoit comme filtre passe-bas un filtre de Butterworth (10).

**7.** Système de détection d'occupant selon la revendication 5, **caractérisé en ce que** l'on prévoit comme filtre passe-bas (10) un filtre de Butterworth du premier ordre.

**8.** Système de détection d'occupant selon l'une quelconque des revendications précédentes, **caractérisé en ce que** les paramètres du filtre (10) sont choisis de telle manière que le signal de sortie filtré ($T_{10}$) du capteur de température coïncide au moins sensiblement avec la température ($T_{Foam}$) de la mousse obtenue par des mesures expérimentales.

**9.** Système de détection d'occupant selon l'une quelconque des revendications précédentes, **caractérisé en ce que** le capteur de pression comprend une nappe de capteur flexible, remplie de fluide.

**10.** Système de détection d'occupant selon la revendication 9, **caractérisé en ce que** le capteur de pression fournit une valeur de pression correspondant à la pression à l'intérieur de la nappe de capteur.

**11.** Système de détection d'occupant selon l'une quelconque des revendications précédentes, **caractérisé en ce que** le capteur de pression est disposé immédiatement en dessous de la mousse du siège.

**12.** Système de détection d'occupant selon l'une quelconque des revendications précédentes, **caractérisé en ce que** le capteur de température comprend une thermistance.

**13.** Système de détection d'occupant selon l'une quelconque des revendications précédentes, **caractérisé en ce que** le capteur de température est placé dans la région de l'unité électronique de commande et/ou d'évaluation.

**14.** Système de détection d'occupant selon la revendication 13, **caractérisé en ce que** le capteur de température est installé dans le même boîtier que l'unité électronique de commande et/ou d'évaluation.

**15.** Système de détection d'occupant selon l'une quelconque des revendications précédentes, **caractérisé en ce que** l'unité électronique de commande et/ou d'évaluation est placée et fixée en dessous du siège de véhicule.

**16.** Système de détection d'occupant selon l'une quelconque des revendications précédentes, **caractérisé en ce que** l'on compare au moyen de l'unité électronique de commande et/ou d'évaluation la pression mesurée par le capteur de pression avec au moins une valeur de paramètre comme par exemple la valeur de pression à vide et/ou un seuil d'admissibilité, et on décide, en fonction du résultat de la comparaison, si un airbag est déclenché ou non, la valeur de paramètre concernée étant modifiée de manière correspondante dans le cadre de la compensation de la dépendance à la température.

# FIG. 1

EP 1 470 968 B1

# FIG. 2

# FIG. 4

# FIG. 3